# EUROPÄISCHE PATENTSCHRIFT

(11) **EP 3 280 565 B1**
(45) Veröffentlichungstag und Bekanntmachung des Hinweises auf die Patenterteilung: **25.09.2019**
(21) Anmeldenummer: 16716845.9
(22) Anmeldetag: 08.04.2016
(51) Int. Cl.: B23Q 1/48, B23B 47/34, B23Q 1/70, B23Q 5/32, B23Q 11/10

(54) **BETRIEBSVERFAHREN FÜR EINEN WERKZEUGANTRIEB MIT SPINDELWELLE**
METHOD OF OPERATING A TOOL DRIVE HAVING A SPINDLE SHAFT
MÉTHODE D'ENTRAÎNEMENT D'UNE BROCHE PORTE-OUTIL

(30) Priorität: 08.04.2015 DE 102015105338
(43) Veröffentlichungstag der Anmeldung: 14.02.2018
(73) Patentinhaber: LTI Motion GmbH, 35633 Lahnau (DE)
(72) Erfinder: DIRSCHERL, Markus, 88142 Wasserburg (DE); VON LÖWIS, Johannes, 35633 Lahnau (DE)
(74) Vertreter: Spachmann, Holger
(86) Internationale Anmeldenummer: PCT/EP2016/057759
(87) Internationale Veröffentlichungsnummer: WO 2016/162483

(56) Entgegenhaltungen:
- EP-A1- 1 724 054
- EP-A1- 2 796 247
- EP-A1- 2 851 153
- EP-A2- 1 724 502
- WO-A1-96/39274
- WO-A1-2013/088343
- WO-A1-2013/142890
- WO-A1-2016/062964
- DE-A1- 4 025 610
- DE-A1-102007 021 294
- DE-A1-102007 053 350
- DE-A1-102011 080 796
- FR-A1- 2 944 722
- US-A- 4 180 946
- US-A- 5 997 223
- US-A1- 2006 251 480
- US-A1- 2010 272 530
- US-A1- 2013 257 206

## Beschreibung

### STAND DER TECHNIK

Die vorliegende Erfindung betrifft einen Werkzeugantrieb mit Spindelwelle und ein Betriebsverfahren zur spanenden Bearbeitung von Werkstücken.

Erste Arbeiten im Bereich der Vibrationsspanbearbeitung begannen in den 1950er Jahren durch Ptr. V. N. Poduraev an der Moskauer Baumann Universität. Ein Hauptprinzip beruht darauf, axiale Vibrationen oder Schwingungen zusätzlich zu der Vorschubbewegung des Bohrers zu erzeugen, um Bohrspäne kleinster Größe zu erreichen, die leicht aus dem Schneidbereich entfernt werden können.

Hierbei werden zunächst zweierlei Spindelwellensysteme eingesetzt, sogenannte selbstschwingende Spindelsysteme und Spindelsysteme mit externer Schwingungsanregung.

Im Fall der selbstschwingenden Spindelsysteme wird die Eigenfrequenz des Werkzeugs genutzt, um Eigenschwingungen zu erzeugen und die Bohrspäne zertrümmern und kleinteilig granulieren zu lassen. Die Schwingungsfrequenz wird vom Masse-Feder-System der Spindelwelle, des Werkzeughalters inklusive Bohrwerkzeug bestimmt.

Daneben werden aktiv betriebene piezoelektrische Systeme zur Erzeugung und Steuerung von überlagerten Vibrationen eingesetzt, siehe z.B. die DE 10 2009 027 688 A1. Diese Systeme zeigen hohe Schwingungsfrequenzen bis zu 2 kHz oder deutlich höher für kleinste Größen von Bohrspänen von einigen Milli- bis Mikrometer. Diese sind besonders für ein Bohren von kleinen Löchern geeignet.

Die DE 103 43 682 A1 schlägt ein mechanisch gelagertes Werkzeugsystem vor, das einen additiven Linearantrieb, der einen piezoelektrisch oder magnetisch arbeitenden Aktuator umfasst, der eine längsaxiale Vibrationsbewegung mit einer Frequenz ω erzeugen kann. Die Erzeugung der Mikrovibrationsschwingung ist in axialer Richtung gerichtet und wird durch einen zur bereits vorhandene mechanischen Lagerung und Einspannung zusätzlich vorgesehenen magnetischen Aktuators bewirkt, der in ein mechanisches Spannsystem eingefügt ist. Die DE 103 43 682 A1 lehrt somit ein mechanisch gelagertes HSK-Werkzeugspannsystem, bei dem am Ende der Spindelwelle in der Werkzeugaufnahme ein Aktuator nachträglich aufgenommen ist und gibt weder Hinweis auf eine adaptive Verstellung der Vibrationsfrequenzen oder Amplituden in Abhängigkeit der verwendeten Materialien noch auf eine aktives Axialmagnetlager. Nachteilig ist bei dieser Lösung weiterhin, dass die notwendige Energie zur Schwingungserzeugung aufwändig durch Schleifringe o.ä. eingebracht werden muss.

Daneben können Vibrationen durch bekannte mechanische Systeme erzeugt werden, die z.B. in üblichen Schlagbohrmaschinen eingesetzt werden. Die Schlagfrequenz wird durch eine Kombination aus der Drehzahl und der Anzahl von Schwingungen pro Umdrehung fest vorgegeben und beträgt lediglich wenige Schwingungen pro Umdrehung, wodurch kleinteilige Spanformen und Spangrößen erreichbar sind.

In Bezug auf eine mechanisch angetriebene aktive Vibrationsschwingungserzeugung ist im Bereich eines Industriellen Einsatzes die SineHoling® Technologie der Fa. MITIS, Frankreich zu erwähnen, die z.B. in der US 2013 0051946A1 erläutert ist. Durch ein relativ komplexes mechanisches Getriebe kann eine Spindelwelle mit hochfrequenten axialen Vibrationen überlagert werden.

Aufbau und Verwendung von Axial- und Radialmagnetlager für schnell drehende Rotationswellen, z.B. für Vakuumpumpen sind seit längerem bekannt. Diverse Konstruktionen von Axial- und Radialmagnetlager sind beispielsweise in dem Buch von Gerhard Schweitzer: "Magnetlager: Grundlagen, Eigenschaften und Anwendungen Berührungsfreier, Elektromagnetischer Lager" Springer Verlag Taschenbuch vom 27. April 1993 (ISBN-13: 978-3662084496) dargestellt.

Insbesondere im Bereich des Tieflochbohrens zeigten sich erhebliche Vorteile des Vibrationsbearbeitens, insbesondere Vibrationsbohrens und Vibrationsfräsens, wobei Späne praktisch restlos aus dem Bohrloch entfernt werden können und die Werkzeug- und Werkstücktemperatur gesenkt werden kann. Diese Aspekte sind insbesondere bei einem Bohren ohne Schmiermittelanwendung, d.h. bei Trockenbohrverfahren und bei Anwendungen, bei dem Werkstücke mit einem Materialmix, wie z.B. Verbundwerkstoff-Werkstücke in der Luftfahrtindustrie gebohrt werden müssen, von erheblichem Vorteil. Beim Durchbohren von Kompositematerialien und Verbundwerkstoffen kommen abhängig vom am Bohrkopf anliegenden Material zu verschiedengroßen Bohrspänen. Beim Durchbohren von Werkstücken entsteht ein Bohrgrat durch die Materialverdrängung entlang der Peripherie des Ein- und Austrittslochs, wobei die Grathöhe und Gratausdehnung vom Vorschub abhängt, und durch eine Vibrationsbeaufschlagung eines Bohrwerkzeugs beeinflusst werden kann.

Nachteilig an den obigen Verfahren sind die geringe Steuerbarkeit der Vibrationseinbringung und Kontrolle des Bearbeitungsverfahrens und die konstruktiv aufwändigen und platzverschwendenden Lösungen sowie der verschlechterte Wirkungsgrad beim Bohren.

Aus dem Stand der Technik sind daneben magnetgelagerte Wellen und Spindeln bekannt, wie z.B. in der DE 10 2005 030 724 A1, die bevorzugt im Bereich hochfrequent rotierender Antriebe für Turbomolekularpumpen, Kompressoren und dergleichen eingesetzt werden.

Im Bereich magnetgelagerter Spindelwellen sind in der DE 20 2007 010 866 U1 und in der DE 10 2006 036 004 A1 Bohrspindelwellen mit Magnetlager bekannt, die eine axiale Ausrichtung der Spindelachse und einen axialen Vorschub mittels einer Ansteuerung der magnetfelderzeugenden Spulen des Magnetlagers bewirken können. Die Ansteuerung der Magnetlager dient zur quasistatischen Ausrichtung der Spindel im Werkzeugprozess, wobei keine Beeinflussung des spanabhebenden Prozesses an sich erfolgt, sondern lediglich eine Achsrichtung der Spindelachse beeinflusst wird. Im Detail betrifft die DE 10 2006 036 004 A einen Werkzeugantrieb mit sowohl axial als auch radial angeordneten Magnetlagern, die dazu dienen soll, axial und radial Verschwenkbewegungen durch Ansteuerung der Magnetlager erreichen zu können um eine Führung der Materialbearbeitung bereitzustellen. Hierbei gibt es keinerlei Hinweis auf eine Unterstützung des Bohrvortriebes an sich während des Bohrfortschritts durch überlagerte Bewegungen, insbesondere Mikrovibrationsschwingungen.

In der US 8 694 133 B2 und der US 7 587 965 B2 wird ein Ansteuerverfahren zur Ansteuerung eines Werkzeugantriebs vorgestellt, dass eine Modulation der Amplitude des Vorschubs vornimmt, um eine verbesserte Schneidbearbeitung zu ermöglichen. Hierzu wird gelehrt, dass ein Steuerungsverfahren mit einer Regelschleife vorgesehen ist, bei dem verschiedene Einflussfaktoren wie eine Abstandsmessung, eine Kraftmessung, eine Beschleunigungsmessung, eine Temperaturmessung, eine Strom- oder Leistungsmessung, eine Bildverarbeitung oder ein digitaler optischer Weggeber herangezogen werden, um eine Optimierung einer Vorschubleistung und einer Vibrationsfrequenz in axialer Richtung einzustellen.

Die gattungsähnlichen Druckschriften DE 34 21 973 A1, DE 1 020 050 51 909 C5, DE 20 2007 010 866 U1 und AT 513 094 B1 betreffen konstruktive Auslegungen von vibrationsbeaufschlagten Werkzeugantrieben, bei denen ultraschallvibrierende axiale Aktoren oder radial steuerbare Magnetlager eingesetzt werden, um den Spanbearbeitungsprozess zu beeinflussen.

Die US 5 997 223 A betrifft ein Axialmagnetlager als Teil eines Axialaktuators, der zur Erzeugung eines Vorschubs der Spindelwelle ausgelegt ist.

Die US 4 180 946 A offenbart eine Werkzeugspindel, die zwei Magnetlager umfasst, wobei eine Lagerung mittels Axialmagnetlager vorbekannt ist. Dabei kann eine radiale und axiale Versatzsteuerung der Spindelwelle im Bereich von 1 µm vorgenommen werden.

US 2013/257206 A1 zeigt eine Vorspannungsvorrichtung für ein Magnetlager. Ein erstes magnetisches Lager lagert axial eine Rotationsbewegung einer Welle, während in einem zweiten magnetischen Lager, das in einer axial versetzen Position bezüglich der Welle angeordnet ist, durch einen mechanischen Pressmechanismus eine Gleitkraft ausgeübt wird, wobei ein Gleitstück eine Presskraft auf das zweite magnetische Lager ausübt. Das Gleitstück bzw. der Pressmechanismus werden bevorzugt durch ein Kugellager gebildet, wobei durch eine Zentrifugalkraft durch die Drehbewegung ein Verlagern der Kugeln radial nach außen erfolgt, die demzufolge einen mechanischen Kontakt mit dem Keilelement hervorruft und so eine axial Presskraft ausübt. Ein so gelagertes Werkzeug kann für Schruppschleifmaschinen mit niedriger Drehzahl sowie Feinbearbeitungsmaschinen mit hohen Drehzahlen zum Einsatz kommen.

In der DE 10 2011 080796 A1 ist eine mechanische Axiallgeranordnung gezeigt, die in radiale sowie in axiale Richtung wirkende Lasten tragen kann. Dafür besitzt die mechanische Axiallageranordnung mit einem kugelförmigen Wälzkörper oder einem Lageraußenring und einem davor beabstandeten Lagerinnenring. Durch eine Magnetanordnung kann eine magnetische Vorspannkraft zwischen diesen beiden Lagerringen erzeugt werden. Durch diese Vorspannung kann ein weiteres Lager eingespart werden.

Die EP 1 724 502 A2 offenbart eine Fluidkupplungsvorrichtung, die mit einem Rotorelement kommuniziert und mit entweder komprimierbaren oder inkompressiblen gefrorenen Medien betreibbar ist. Die Fluidkupplungsvorrichtung, ermöglicht, eine Kupplungsvorrichtung mit einem einzigen Einlasskanal und einer äußeren Einrastvorrichtung zum Schmieren der darin verwendeten Dichtungsflächen mit Schmiermitteln zu betreiben. Die Fluidkupplungsvorrichtung stellt eine Hochgeschwindigkeitsdreheinheit bereit, bei denen das Medium durch einen einzigen Einlasskanal in die Dreheinheit eingeführt wird. Es genügt lediglich, dass die Dreheinheit eine einzige Einlassöffnung und ein einzelnes sekundäres oder elastisches Dichtungselement aufweist, das strukturell so angeordnet ist, dass es das richtige ausgeglichene Verhältnis bietet, um den Betrieb der Drehverbindung mit inkompressiblen und komprimierbaren Medien zu ermöglichen.

Ausgehend von dem oben genannten Stand der Technik ist es die Aufgabe der Erfindung, ein verbessertes Verfahren zur optimierten spanabhebenden Bearbeitung vorzuschlagen.

Diese Aufgabe wird durch ein Betriebsverfahren nach dem unabhängigen Anspruch gelöst. Vorteilhafte Weiterbildungen der Erfindung sind Gegenstand der abhängigen Ansprüche.

### OFFENBARUNG DER ERFINDUNG

Erfindungsgemäß wird ein Betriebsverfahren für ein Werkzeugantrieb mit einer Spindelwelle vorgeschlagen, wobei ein Werkzeugantrieb das Betriebsverfahren durchführen kann, und hierzu zumindest einen elektromagnetischen Axialaktor und eine Steuer- und/oder Regeleinrichtung für den Betrieb des Axialaktors zur längsaxialen Lageänderung der Spindelwelle umfasst, bei dem die Steuer- und/oder Regeleinrichtung den Axialaktor zur Erzeugung einer Mikrovibrationsbewegung der Spindelwelle unabhängig von und überlagerbar zu einem Vorschub ansteuert, um Spangröße und Spanform des Materialabtrags zu beeinflussen. Der elektromagnetische Axialaktuator kann durch eine veränderbare Ansteuerung der Steuer-/ und Regeleinrichtung axiale Mikrovibrationsbewegungen der Spindelwelle erzeugen, um die Spanbildung zu beeinflussen, insbesondere um kleinteilige, leicht abzutransportierende Späne zu erzeugen. Somit kann eine Adaption einer axialen Vibrationsschwingung der Spindelwelle erreicht werden, um geänderten Spanbearbeitungs-Prozessparameter gerecht zu werden, wie z.B. einem Verschleiß des Werkzeugs, Werkzeug- und Werkstücktemperatur, variierende Materialarten, komplexer Werkstückaufbau wie z.B. Kompostmaterialien etc. Dies kann durch eine gesteuerte und veränderliche Beeinflussung des Stromes zur Ansteuerung des elektromagnetischen Axialaktors, der eine axiale Lage der Spindelwelle beeinflusst, erreicht werden.

Der Werkzeugantrieb umfasst eine Steuer- und/oder Regeleinrichtung, die zur Erzeugung der Mikrovibrationsbewegung ausgelegt ist, und weitere Aufgaben wie z.B. den Vorschub des Werkzeugs, eine Antriebsmotorsteuerung und weitere Prozessparameter der Spanbearbeitung steuern und regeln kann. Der Antrieb kann hierzu weitere Sensoren und Aktuatoren, insbesondere einen Antriebsmotor der Spindelwelle und einen Werkstückaktuator zur Festlegung der Position des Werkstücks gegenüber dem Werkzeug umfassen. Die Spindelwelle ist eine direkt- oder indirekt angetriebene präzise gelagerte Welle mit integrierter Werkzeugschnittstelle. Die Spindelwelle ist eine wichtige Baugruppe vieler moderner Werkzeugmaschinen.

Der Axialaktor kann als Axialmagnetlager, als Linearmotor oder als eine Kombination eines Axialmagnetlagers und eines Linearmotors vorgesehen sein. So kann der Linearmotor eine Makrovorschubbewegung und gleichzeitig eine Mikrovibrationsbewegung erzeugen, oder die Mikrovibrationsbewegung kann durch ein Axialmagnetlager bewirkt werden. Hierdurch erzeugt die Spindelwelle an sich Mikrovibrationsbewegungen, und nicht nur eine Werkzeugaufnahme am Endabschnitt der Spindelwelle, in der ein Werkzeug gelagert ist. Die hohe Masse der Spindelwelle mit angeschlossenem Werkzeug kann Mikrovibrationsbewegungen mit hohem Impuls und entsprechender Bearbeitungswirkung ausführen. Entsprechend können verringerte Mikrovibrationsbewegungen bei entsprechender Masse der Spindelwelle mit angeschlossenem Werkzeugsystem eine hohe Impulsbeaufschlagung bereitstellen. Gemäß der Erfindung ist die Spindelwelle zumindest axial mittels eines Axialmagnetlagers magnetisch gelagert oder kann mittels eines Linearmotors axial bewegt werden. Die Radiallager der Spindelwelle sind derart ausgelegt, dass Axialbewegungen ausgeführt werden können und können als mechanische Lager mit Spiel für die Vibrationsbewegungen ausgelegt sein. Somit werden durch eine elektrische Ansteuerung des axialen Magnetlagers und/oder des Linearmotors in der Spindelwelle Vibrationsstöße in Werkzeugrichtung erzeugt, wodurch die entstehenden Späne in Ihrer Größe unmittelbar beeinflusst werden. Die elektrische Steuerung erlaubt eine adaptive Einstellung der Mikrovibrationsbewegung, die abhängig von Parametern der Spanbearbeitung wie Materialart, Drehzahl, Vorschubgeschwindigkeit etc. eingestellt werden können. Die axiale Bewegungsrichtung entspricht der Richtung der Rotationsachse der Spindel und des Werkzeugs.

Erfindungsgemäß ist somit ein Betriebsverfahren mittels eines vorab dargestellten Werkzeugantriebs mit magnetisch gelagerter Spindelwelle vorgeschlagen, wobei durch zumindest einen elektromagnetischen Axialaktor als Magnetlager unabhängig von einem Vorschub eine einstellbare axiale Mikrovibrationsbewegung der Spindelwelle überlagert wird, um bei Bohrungen insbesondere bei Tieflochbohrungen die entstehenden Spangröße und Spanform des Materialabtrags zu beeinflussen.

Die Radiallagerung der Spindelwelle kann grundsätzlich durch mechanische Lager mit einem ausreichenden Spiel für axiale Mikrovibrationsschwingungen der Spindelwelle geleistet werden. Allerdings verursachen mechanische Lager Reibungsverluste und verkürzen die Einsatzzeit des Antriebs. In einer vorteilhaften Weiterbildung kann zumindest ein Radiallager der Spindelwelle, bevorzugt alle Lager als Flüssiglager und/oder Luftlager ausgelegt sein. Ein Flüssiglager kann beispielsweise ein hydrodynamisches oder hydrostatisches Gleitlager sein, wobei ein Ölfilm mit Hilfe einer externen Ölpumpe unter Druck gesetzt wird, wodurch sich die beiden gegeneinander bewegenden Teile nicht direkt berühren. Es herrscht verlustarme Flüssigkeitsreibung. Ein Luftlager kann als aerostatisches oder aerodynamische Lagers ausgeführt sein, bei denen die beiden zueinander bewegten Lagerungspartner durch einen dünnen Luftfilmgetrennt sind. Dadurch erlauben sie eine stick-slip-freie und reibungsfreie Bewegung. Diese Lagertypen ermöglichen zumindest in Grenzen eine praktisch reibungslose axiale Verschieblichkeit ohne erhöhtem mechanischen Widerstand oder Abrieb, so dass diese zur Radiallagerung der Spindelwelle, die axial mit Mikrovibrationsbewegungen überlagert ist, vorteilhaft geeignet sind. Diese Lagertypen weisen eine schlanke und robuste Bauform auf, und können problemlos in Werkzeugantrieben integriert werden.

In einer vorteilhaften Weiterbildung der Erfindung können zumindest ein, bevorzugt alle Radiallager als Radialmagnetlager ausgebildet sein, die von der Steuer- und/oder Regeleinrichtung zur Erzeugung von radialen Bewegungen der Spindelwelle ansteuerbar sind. Somit können nicht nur axiale sondern auch radiale Bewegungen, insbesondere Mikrovibrationsbewegung zur Spanbrechung und Effizienz des Spanbearbeitungsverfahrens erzeugt werden. Durch die Kombination der axialen Schwingungsbewegungen mit der radialen Verstellung, z.B. Verkippung oder seitlicher Versatz der Drehachse kann insbesondere eine verbesserte Senkbohrung oder eine Feinbearbeitung mittels eines Kombiwerkzeuges erreicht werden. Ein Vorteil eines magnetgelagerten Radiallagers für eine Kombination mit einer Axialvibrationsbewegung ist, dass konventionelle Wälzlager in Bearbeitungsspindeln keine Axialschwingung ermöglichen, wobei des Weiteren ein hoher Verschleiß insbesondere bei hohen Drehzahlen bedingt ist.

In einer vorteilhaften Weiterbildung kann die Regel- und/oder Steuereinrichtung eingerichtet sein, eine geführte radiale Spindelbewegung durch mindestens ein Radialmagnetlager durchzuführen, so dass ein Entgraten einer Bohröffnung und/oder eine radiale Erweiterung eines Bohrkanals durchführbar sind. Magnetgelagerte Spindelwellen bietet die Möglichkeit, die Welle in radialer Richtung zumindest geringfügig zu bewegen. Dies kann z.B. zum Entgraten von Bohrungen genutzt werden, indem nach dem Bohren bei zentrisch rotierender Welle zunächst das Werkstück und die Spindel so gegeneinander verfahren werden, dass sich der Schneidenbereich des Bohrers fast vollständig im Bereich der zu entgratenden Bohrung befindet. In dieser Position bewirkt eine kreisförmige Bahnbewegung im Radiallager (durch Vorgabe entsprechender Sollverläufe in beiden Radiallagerebenen oder nur in der werkzeugseitigen Radiallagerebene), dass die Schneiden des Werkzeugs den gesamten Bohrungsrand überstreichen und den Grat von dort entfernen. Somit können auf elegante Weise zusätzliche Senkbohrungen oder Entgratvorgänge auch auf der Werkstückunterseite realisiert werden.

Mit einem geeigneten Bearbeitungswerkzeug ist somit auch das Entgraten des austrittsseitigen Bohrungsrands möglich.

Die radiale Bewegungsmöglichkeit der Welle einer magnetgelagerten Bohrspindel gestattet es auch, eine bestehende Bohrung (z.B. mit einem Fräswerkzeug welches kleiner ist als der Bohrungsdurchmesser) geringfügig auszufräsen, indem für beide Radiallagerebenen Sollverläufe vorgegeben werden, so dass die Wellenrotationsachse eine Kreisbahn beschreibt.

Ein stetiger Übergang zwischen zentrischer Wellenrotation und Wellenrotation bei Kreisbahnbewegung der Wellenrotationsachse ist sowohl beim Entgraten als auch beim Ausfräsen einer Bohrung sinnvoll. Grundsätzlich können durch die Verstellung der Wellenachsen auch konische oder weitere unrunde Bohrungsgeometrien erzeugt werden.

In einer vorteilhaften Weiterbildung der Erfindung können zwei oder mehrere Axial- und/oder Radiallager zur Erhöhung von Verstellkräften vorgesehen sein. Somit sind mindestens ein Axiallager mit mindestens einem Aktuator und ggf. mehrere Aktuatoren zur Krafterhöhung ausgerüstet. Die Aktoren können sequentiell parallel oder einzeln angesteuert werden, um summarisch die Bearbeitungsenergie zu erhöhe.

Ein Aspekt der Erfindung ist eine Adaption der Mikrovibrationserzeugung der Spindelwelle an variierende Spanprozessparameter. Hierzu ist es besonders vorteilhaft, wenn die Regel- und/oder Steuereinrichtung eine Speichereinheit und/oder eine Funktionserzeugungseinheit umfasst, und eingerichtet ist, Sollwerte des Schwingungsverlaufs, insbesondere der Frequenz und Amplitude der Mikrovibrationsbewegungen abhängig von geometrischen und/oder physikalischen Daten des Werkstückes und/oder gemessenen oder indirekt ermittelten Prozessgrößen und/oder Steuereingängen vorzugeben. So kann der geometrische Aufbau des Werkstücks oder die Materialverteilungen oder Materialvariation beim Bearbeitungsverfahren berücksichtig werden, wobei bei bestimmten Werkstückpositionen und Vorschubtiefen geänderte Mikrovibrationsbewegungen eingesetzt werden. Auch kann beispielsweise eine Drehzahl, Vorschubgeschwindigkeit, Vorschubdruck, Energieaufnahme des Antriebsmotors, Drehmoment der Spindelwelle, Motorstrom, axiale und/oder radiale Spindelposition oder weitere Prozessparameter zur Sollwertvorgabe der Mikrovibrationsschwingung herangezogen werden.

Der Sollverlauf für die Axialposition kann mit Hilfe einer Tabelle oder durch Überlagerung von Funktionen erzeugt werden. Der Sollverlauf ist abgesehen von Übergängen beim Eintauchen ins Material oder bei Schichtwechseln in Verbundwerkstoffen in der Regel eine periodische Funktion. Die Periodendauer dieser Funktion kann unabhängig von der Spindeldrehzahl gewählt werden. Ein Verhältnis von 1,5 = T_rot/T_auslenk zwischen der Periodendauer der Spindelrotation T_rot und der Periodendauer T_auslenk des Axialpositionssollverlaufs ist technologisch vorteilhaft sinnvoll. Das Verfahren ist aber nicht auf dieses Verhältnis beschränkt. Ein Sollverlauf der Mikrovibrationsbewegung kann folgende Betriebsparameter haben, die individuell einstellbar sind:
- empirische Profilvorgabe;
- Regelung auf max. Strom;
- Vorsteuerung bzw. Überlagerungssteuerung mit einer übergeordneten Vorschubsteuerung;
- Einbeziehung von gemessener Axialposition der Spindel;
- Berücksichtigung von statistischen Werten (typ. Position für Werkstückkontakt, Kenntnis der Werkstückstruktur und Abmessungen);

Ein wesentlicher Vorteil der vorgeschlagenen Vibrationsbohrlösung gegenüber dem Stand der Technik besteht darin, dass bereits die Spindelwelle die Schwingung ausführt und kein weiteres schwingungserzeigendes Element zwischen der Spindelwelle und dem Werkzeug notwendig ist. Hierdurch können folgende Vorteile gegenüber dem Stand der Technik erreicht werden:
- Kompakter Systemaufbau, ohne dass ein Adapter für einen seriellen Aufbau eingesetzt werden muss;
- Hohe Präzision (z.B. Rundlauf) da kein Adapter oder Verlängerung notwendig wird;
- Standard Werkzeugaufnahmen können weiterhin verwendet werden, welche kostengünstig sind;
- Einfacher Werkzeugwechsel durch Verwendung von Standard-Werkzeugaufnahmen von konventionellen Spindeln.

Im Stand der Technik werden nachgeschaltete, elektrisch wirkende, aktive Schwingungselementen eingesetzt, für die zusätzliche Energie in das System eingebracht werden muss (Schleifring, Induktiv, ...). Im Werkzeugantrieb für ein erfindungsgemäßes Betriebsverfahren wird die Energie aus der Energiezufuhr für die magnetgelagerte Bohrspindel entnommen, so dass eine höhere Energieeffizienz erreicht wird und Aufwand für Verkabelung und Energiebereitstellung eingespart wird.

Ein wesentlicher Vorteil des Werkzeugantriebs ist, dass der elektrische Strom im Axiallager im Zusammenhang mit der Axialkraft beim Bohren steht. Mit zunehmender Kraft steigt auch der Strom an. Dies ermöglicht die Analyse und Optimierung des Bohrprozess ohne zusätzliche aufwendige Messtechnik, um damit z.B. Standzeituntersuchungen (mit zunehmendem Verschleiß steigt die Kraft) oder Werkzeug- oder Prozessentwicklungen durchzuführen.

In einer vorteilhaften Weiterbildung kann das Vorschubsteuermittel eingerichtet sein, Bearbeitungsprozessgrößen wie Aufsetzen auf Werkstückoberfläche und/oder Durchdringen einer anderen Materialschicht zu erkennen, und Sollwerte der Mikrovibrationsbewegung des Axialpositionsregelmittels vorzugeben.

In einer vorteilhaften Weiterbildung der Erfindung können die Regel- und/oder Steuereinrichtung eingerichtet sein, den Sollwert des Schwingungsverlaufs zumindest eines Teilbewegungsabschnitts der Mikrovibrationsbewegungen einzustellen und/oder eine Mikrovibrationsbewegung im Bearbeitungsprozess ein- bzw. auszuschalten. So kann durch eine Anpassung der Kurvenform die Werkzeugeingriffszeit beeinflusst werden oder auf die Betriebsparameter zur Zuführung von Schmiermittel, zum Ausräumen der Bohrung entsprechend Einfluss genommen werden. Es bieten sich splineförmige oder parabolische Bewegungsdefinitionen, die stetig und evtl. stetig differenzierbar in andere Bewegungskurven übergehen können.

Ein wesentlicher Vorteil der vorgeschlagenen Vibrationsbohrlösung gegenüber dem Stand der Technik besteht in der weitgehend freien Parametrierbarkeit des Axialschwingungsverlaufs, wie sie für unterschiedliche Prozessparameter (insbes. Bohrungsdurchmesser, Material, Drehzahl und Vorschub) erforderlich sind. Hierdurch ist es möglich, die Amplitude der Schwingung zu variieren bzw. die Schwingung zu deaktivieren. Durch geeignete vordefinierte Axialpositionsverläufe kann der Zerspanungsprozess optimiert sowie die Werkzeugbelastung reduziert werden. Durch geeignete Wahl der Axialpositionsverläufe, z.B. durch eine Reduzierung der Axialgeschwindigkeit beim Eingriffspunkt des Werkzeuges in das Werkstück können sowohl die erforderlichen Steuerströme und die entstehende Werkzeugbelastung deutlich reduziert werden.

Insbesondere unterscheidet sich der vorgeschlagene Werkzeugantrieb und das hierdurch ausführbare Bearbeitungsverfahren vom Stand der Technik durch eine weitgehend freie Parametrierbarkeit der Schwingungsform, Schwingungsfrequenz, Amplitude, Drehzahl des Werkzeugs sowie der Größe des kontinuierlichen Bohrvorschubs. Durch eine geeignete Kombination dieser Parameter kann die Eintrittsgeschwindigkeit und somit die Belastung des Werkzeugs in das Material beeinflusst werden. Durch eine Reduzierung der Belastung ist es beispielsweise möglich (bruch-)empfindliche Schneidstoffe oder Beschichtungen wie z.B. Diamant verwenden zu können.

Eine Deaktivierung ist beispielsweise beim Fertigbearbeiten einer Senkung sinnvoll, damit die Senkungsgeometrie kein axiales Höhenprofil aufweist.

Eine Magnetlagerregelung der Bohrspindel enthält üblicherweise einen Regelkreis für die Axialposition (z.B. einen PID-Regler oder Zustandsregler). Zur Verbesserung der Dynamik der Regelkreise kann vorteilhaft eine Vorsteuerung vorgesehen sein. Insbesondere ist es sinnvoll, den Axialpositionsregler mit einer Vorsteuerung zu ergänzen. Dieser Axialpositionsregler erzeugt einen Sollstrom für einen unterlagerten Stromregelkreis. Durch den Axialpositionsregler und den Axialstromregler wird die Spindelbewegung in axialer Richtung entlang des Axialsollpositionsverlaufs stabilisiert. Um bohrtechnologisch sinnvolle Axialpositionsverläufe möglichst gut zu erreichen, ist es sinnvoll, den Axialpositionsregler um eine Stromvorsteuerung zu ergänzen. Der Sollstrom des Axiallagerstromreglers ist also die Summe aus dem vom Axialpositionsregler berechneten Strom und dem axialen Vorsteuerstrom.

In einer vorteilhaften Weiterentwicklung kann die Regel- und/oder Steuereinrichtung eine Axialpositionsregeleinheit umfassen, die vorteilhaft Daten mit einem vorgelagerten Vorschubsteuermittel zur Erzeugung des linearen Vorschubs austauscht.

Für die dynamische Erzeugung der Stromsollwerte für die Axiallagerelemente können der Regel- und Steuereinrichtung verschiedene Einflussgrößen und Parameter zur Verfügung gestellt werden. Neben typischen Prozessparametern wie Axialsollpositionsverläufe, Material, Bohrungsdurchmesser und der Struktur/Geometrie des Werkstückes können Messgrößen oder indirekt ermittelte Zustandsgrößen wie Spindel-Drehzahl, axiale Ist-Position der Spindel, Steuerströme des Axiallagerelementes, Ist-Drehmoment zur Bestimmung der Stromsollwerte herangezogen werden. Zusätzlich können durch Steuerleitungen Umschaltvorgänge z.B. Ausschalten der Mikrovibration oder dynamische Begrenzungen der Stellgrößen initiiert werden.

In der Regel- und Steuereinrichtung können verschiedene Axialpositionsverläufe in Tabellen abgelegt sein, zwischen denen je nach Betriebsart umgeschaltet werden kann.

Da die für unterschiedliche Prozessparameter (Axialsollpositionsverläufe, Material, Bohrungsdurchmesser, Vorschub, Drehzahl usw.) erforderlichen Vorsteuerstromverläufe verschieden sind, ist es weiterhin vorteilhaft, den Vorsteuerstromverlauf adaptiv anzupassen. Zu dieser adaptiven Anpassung wird die Abweichung zwischen Axialsoll- und -istposition ausgewertet. Außerdem wird ausgenutzt, dass wesentliche Anteile des Vorsteuerstromsignals ebenfalls periodisch (mit der Periodendauer des Axialsollpositionsverlaufs T_auslenk) sind. Ziel der Adaptation ist die betragsmäßige Minimierung der Differenz zwischen Axialsoll- und -istposition.

Durch den Bohrprozess wirken Kräfte in axialer Richtung auf die Welle, denen der Axialpositionsregler durch Anpassung des Axialsollstroms entgegenwirkt. Anhand des Axialsoll- oder -iststroms besteht daher die Möglichkeit, zu erkennen, wenn der Bohrer ins Material eintaucht. Bei Verbundwerkstoffen können auch Schichtübergänge erkannt werden. Diese Information kann dazu verwendet werden, die Parameter der Axialsollpositionsschwingung anzupassen. Auch kann die Information an die Steuerung der Vorschubachse weitergegeben werden, um materialabhängig die Vorschubgeschwindigkeit anzupassen. Auch kann die Information zur Anpassung der Spindeldrehzahl verwendet werden.

Die Anpassung der Parameter der Axialsollpositionsschwingung kann auch durch die Steuerung der Vorschubachse oder durch eine Kombination von Steuerungsanweisungen und aus dem Axialstrom ermittelten Größen erfolgen.

In einer vorteilhaften Weiterbildung kann das Vorschubsteuermittel und/oder Axialpositionsregelmittel eingerichtet sein, einen Parameterwechsel der Bewegungsvorgaben des Lagers durch ein stetiges Bewegungsprofil herbeizuführen. Es ist sinnvoll, den Übergang zwischen unterschiedlichen Parametersätzen der Axialsollpositionsschwingung stetig zu gestalten.

Das Prinzip von axialen Magnetlagern zur Erzeugung von Mikrovibrationsbewegungen, ggf. in Kombination mit Axial-Luftlager ist, dass das Funktionsprinzip mit einem direktangetriebenen Linearmotor vergleichbar ist.

Die Frequenz der Oszillation ist im Wesentlichen abhängig vom Werkzeugdurchmesser und des Weiteren auch vom Werkstoff. Die axiale und radiale Mikrovibrationsbewegung kann adaptiv an gegebene Bearbeitungsaufgaben eingesetzt und dynamisch im Bearbeitungsprozess geändert werden.

In einer vorteilhaften Weiterbildung kann die Regel- und/oder Steuereinrichtung eingerichtet sein, mittels der Aktoren Mikrovibrationsbewegungen zwischen 1 Hz und 1kHz, bevorzugt zwischen 5 Hz und 500 Hz zu erzeugen, wobei ein Verhältnis Werkzeugdrehfrequenz zur Mikrovibrationsfrequenz einstellbar ist, und bevorzugt im Bereich 1 bis 3, insbesondere 1,5 liegt und/oder eine Mikrovibrationsbewegungsamplitude von 0,01 mm und 1 mm, bevorzugt zwischen 0,01 mm und 0,5 mm einstellbar ist. Die Vibrationsfrequenz ergibt sich aus dem Verhältnis Drehfrequenz Werkzeug zu Schwingungen pro Umdrehung. Der Faktor ist variabel und kann typische Werte von 1,5 annehmen. Die Amplitude der Oszillation kann abhängig vom Werkzeugdurchmesser und Werkstoffart sein.

Vorteilhafterweise sind Betriebs- und Messgrößen der Magnetlagerung und des Antriebs miteinander verknüpft. So kann ein erhöhter Drehmomentbedarf für Spindel, z.B. ein erhöhter Strom im Antriebsregler dazu führen, dass der Vorschub reduziert und der Sollwertverlauf der Mikrovibrationsbewegung angepasst wird, da der Zerspannungsprozess auf einen härteren Werkstoff trifft.

In einer vorteilhaften Weiterbildung kann zumindest ein magnetischer Vorspanneinrichtung, insbesondere ein Permanentmagnet-Vorspanneinrichtung vorgesehen sein, um eine Kraft auf die Spindelwelle in eine vorgebbare Richtung, insbesondere in axialer Werkzeugachsenrichtung vorzugeben. So kann als konstruktive Maßnahme eine permanentmagnetische Vorspannung zur Reduzierung der Verlustleistung oder zum aktiven "Andrücken" an das Werkstück vorgesehen sein, ggf. auch zur Erzeugung eines "Gegendrucks" zur Kompensation der Massekräfte der Spindel.

Zur Reduzierung der auftretenden Verlustleistungen im Magnetlager oder im Rotor (z.B. durch Wirbelstromverluste) können die Magnetlager als Unipolarlager oder auch mit permanentmagnetischer Vorspannung ausgeführt sein.

Weiterhin ist ein Verguss der Sensoren, Aktoren und Verkabelung möglich, um einen verbesserten Schutz und Betriebszeit für die auftretenden Vibrationskräfte zu bieten.

Eine spanabhebende Bearbeitung erzeugt eine hohe thermische Belastung des Werkzeugbereichs am axialen Ende der Spindelwelle. In einer vorteilhaften Weiterbildung wird durch die Spindelwelle und das Werkzeug Druckluft geführt, damit diese die beim Bohrprozess entstehenden kleinteiligen Späne aus der Bohrung blasen kann und kühlend wirkt. Der Druckluft können Zusätze z.B. Öl bzw. feine Öltröpfchen zur Schmierung zugefügt werden, um beispielsweise eine Minimalmengenschmierung (MMS) bereitzustellen. Alternativ kann statt der Druckluft auch ein andres Gas verwendet werden, um die Späne aus der Bohrung zu blasen. Alternativ kann statt der Druckluft auch eine Flüssigkeit verwendet werden, um die Späne aus der Bohrung zu spülen.

In einer vorteilhaften Weiterbildung kann die Spindelwelle zumindest einen Kühlmittelkanal für ein Kühl- und Schmiermittelfluid, insbesondere ein gasförmiges oder flüssiges Kühl- und Schmiermedium umfassen. Vom stehenden Teil des Werkzeugantriebs kann das Kühl- und Schmiermittelfluid über die Spindelwelle bis zum spanenden Werkzeug geleitet werden und Späne abführen sowie das Werkzeug kühlen, wodurch sowohl eine Bearbeitungsleistung als auch die Standzeit des Werkzeugs erhöht werden können.

Vorteilhafterweise kann eine Übergabestelle für das gasförmige oder flüssige Medium welches in die Spindelwelle eingespeist werden kann, flexibel ausgeführt sein, damit die Spindelwelle axial bzw. radial Bewegungen im Bereich 0,01mm bis 0,5mm möglich sind. Dies kann beispielsweise durch ein elastisches Material oder elastisches Element ähnlich einem Faltenbalg realisiert werden.

In einer vorteilhaften Weiterbildung kann eine Werkzeughalterung, die typischerweise an einem axialen Ende der Spindelwelle angeordnet ist, mit der Spindelwelle über zumindest ein Winkelumlenkelement, bevorzugt ein Umlenkgetriebe, Winkelgetriebe oder Kardangelenk abgewinkelt, bevorzugt um 90° gegenüber der Achse der Spindelwelle abgewinkelt angeordnet sein. Ein Umlenkgetriebe bzw. Winkelgetriebe, ein Kreuzgelenk oder ein Kardangelenk dienen dazu, zwei nicht fluchtende Wellen miteinander zu verbinden. Der Beugewinkel kann bei einem Kreuzgelenk während der Drehmoment-Übertragung verändert werden. Die Spindelwelle und die Werkzeughalterung können um einen beliebigen Winkel, bevorzugt um 90° gegeneinander abgewinkelt ausgerichtet sein. So kann zwischen der Spindelwelle und der Werkzeughalterung ein Umlenkelement z.B. Kardangelenk oder ein Winkelgetriebe zwischengeschaltet sein, damit die Drehachsen der Spindelwelle und der Werkzeughalterung abgewinkelt sind. Bei Verwendung eines Umlenkelements von 90 Grad bedeutet dies, dass für ein axiales Schwingen des Bohrwerkzeugs die Schwingung im Radialmagnetlager oder in einem an der Werkzeughalterung weiterhin angreifenden Axialmagnetlager erzeugt werden können. Durch die Umlenkung werden radiale Schwingungen der Spindelwelle in axiale Schwingungen des Werkzeugs umgewandelt. Axialstöße auf das Werkzeug werden als Radialveränderungen auf die Spindelwelle übertragen, so dass eine schwingungstechnische Umsetzung von Spindelwelle und Werkzeug erreicht werden kann. Hierdurch kann eine kompakte Bauform erreicht werden und bestehende Werkzeugmaschinen können mit einem erfindungsgemäßen Werkzeugantrieb nachgerüstet werden.

In einer vorteilhaften Weiterbildung kann im feststehenden Teil oder im beweglichen Teil des Werkzeugantriebs eine Kompensationsschwingungs-Erzeugungseinrichtung umfasst sein, die eingerichtet ist, Schwingungen der Spindelwelle im Werkzeugantrieb zu kompensieren. Damit die Spindelwelle insbesondere bei höheren Frequenzen oder größeren Beschleunigungen möglichst wenig Schwingungen in einen Vorschubschlitten bzw. in das Maschinengestell einleitet, ist es in einer vorteilhaften Weiterbildung möglich die Schwingung (zumindest teilweise) zu kompensieren, indem es mit einem gegenläufigen/gegengerichteten Schwingungssystem kombiniert ist. Der Aktor für das gegenläufige Schwingungssystem kann beispielsweise auf einem piezoelektrisch oder magnetischen Funktionsprinzip basieren. Ein Kompensatonsschwingungs-Erzeugungsaktor kann mit reziproken Schwingungssignalen wie die Spindelwelle beaufschlagt werden, oder kann über eine Regelschleife basierend auf Schwingungssensoren responsiv ein dynamisches Verhalten der Spindelwelle kompensieren.

Vorteilhafterweise können zumindest ein Axialmagnetlager und/oder ein Linearmotor als Axialaktor zur Erzeugung einer axialen Mikrovibrationsbewegungen genutzt wird. Zur Kräfteerhöhung kann eine kombinierte Anwendung beider Aktoren vorteilhaft sein, auch kann der Linearmotor einen Makrovorschub und ein Axialmagnetlager eine Vibrationsschwingung erzeugen. Die Aktoren können auch separat eingesetzt werden.

Vorteilhafterweise kann im Rahmen des vorgeschlagenen Betriebsverfahrens des Werkzeugantriebs zumindest ein Radialmagnetlager mit Radialbewegungen, insbesondere Mikrovibrationsbewegungen beaufschlagt werden. Hierdurch kann die Spanbildung in weiteren Dimensionen beeinflusst und eine radiale Führung des Spanwerkzeugs erreicht werden.

In einer vorteilhaften Weiterbildung kann die Spindelwelle durch das Radialmagnetlager radial geführt werden, um eine gezielte Spindelbewegung zum Entgraten einer Bohröffnung und/oder eine radiale Erweiterung eines Bohrkanals zu erzeugen. Somit kann durch das Werkzeug weitere Bearbeitungsgänge erledigt werden.

In einer vorteilhaften Weiterbildung kann der Steuerstrom zum Betrieb des Axialaktors, insbesondere der Magnetlager durch Steuer- und Regelkreise innerhalb der Steuer- und Regeleinrichtung auf vorgebbare Maximalwerte begrenzt werden. Hierdurch werden Schäden des Werkzeugantriebs verhindert.

In einer vorteilhaften Weiterbildung kann der Sollschwingungsverlauf der Mikrovibrationsbewegung, insbesondere Amplitude und Frequenz der Mikrovibrationsbewegung in Abhängigkeit von direkt oder indirekt ermittelbaren Bohrparametern gewählt und während des Bohrvorgangs angepasst werden. Hierdurch ist eine adaptive Erzeugung der Mikrovibrationsschwingungen möglich.

In einer vorteilhaften Weiterbildung kann Änderungen der direkt oder indirekt ermittelbare Bohrparameter und/oder Parameter des Sollwertverlaufs der Mikrovibrationsbewegungserzeugung hinsichtlich eines Verschleißes des Werkzeugs ausgewertet werden. So kann eine erhöhte Energieaufnahme bei ansonsten gleichen Bohrparametern, eine Erhöhung der Vibrationsbewegung, erhöhtes Drehmoment oder weitere Prozessparameter, die zur Steuerung der Mikrovibrationsbewegung erhoben werden, hinsichtlich einer Abnutzung und Verschleiß oder Defekt des Werkzeugs genutzt werden, um eine verbesserte Kontrolle, Erhöhung der Ausfallsicherheit und Kostenreduktion der Spanbearbeitung insbesondere im Rahmen einer Serienfertigung zu erreichen.

In einer vorteilhaften Weiterbildung kann die Steuer- und Regeleinrichtung die entstehenden Prozesskräfte, insbesondere Anpressdruck, Vorschubkraft, Drehzahl und/oder Drehmoment des Werkzeuges auf vorgebbare Maximalwerte begrenzt. Somit kann ein Verschleiß erkannt und Beschädigung und Überhitzung des Werkzeugs verhindert werden.

In einer vorteilhaften Weiterbildung kann ein Sollwertverlauf der Mikrovibrationsbewegung bei oder vor Aufsetzen des Werkzeuges auf das Werkstück eine geringere Vorschubgeschwindigkeit vorgeben. Hierbei kann das Werkzeug vor Aufsetzen auf der Werkstückoberfläche abgebremst werden, und ein Schlagimpuls verringert werden, so dass die Schneidkanten des Werkzeugs geschont und die Standzeit erhöht wird. D

In einer vorteilhaften Weiterbildung kann die Spindelwelle zur Kompensation von Unwuchten azentrisch zur Spindelwellenachse ausgelenkt werden. Dies kann bevorzugt bei höheren Drehzahlen, insbesondere im Bereich oberhalb von ca. 800 U/min sinnvoll sein, so dass Unwuchten und Vibrationen unterdrückt werden können und auch azentrisch belastende Arbeitsvorgänge wie Fasenschneidvorgänge etc. durchgeführt werden können.

Im Falle einer Überbeanspruchung des Werkzeugsystems, einer ungewollten Impulsbeaufschlagung oder einer mechanischen Resonanzschwingung kann es zu einer Kollision, d.h. einer mechanischen Berührung von Spindelwelle und der Umfassung des Magnetlagers kommen. Bei schnelldrehenden Antrieben kann es zu einer Beschädigung oder Zerstörung der Lager oder der Spindelwelle kommen. In einer vorteilhaften Weiterbildung des Betriebsverfahrens kann mittels einer in der Regel- und/oder Steuereinrichtung umfassten Magnetlager-Positionssensorik unerwünschte Kollisionen der Werkzeuges erkannt und Maßnahmen zur Behebung des Kollisionszustandes eingeleitet werden. Ein Kollisionsschutz lässt sich vorteilhaft einfach realisieren: Durch den Luftspalt in den Axial- oder Radialmagnetlagern gibt es vor einer möglichen Kollision keinen unmittelbaren Kontakt. Durch Sensoren kann die Auslenkung der Spindelwelle von einer übergeordneten Positionssensorik gemessen werden und eine Kollision kann rechtzeitig erkannt und unterbunden werden. Hierzu kann beispielsweise eine Rotationsfrequenz, Drehmoment oder Vorschub der Spindelwelle reduziert, erhöht oder abgeschaltet werden, um eine Kollisionsneigung zu verhindern.

### ZEICHNUNGEN

Weitere Vorteile ergeben sich aus der vorliegenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: ein erstes Ausführungsbeispiel eines erfindungsgemäßen Werkzeugantrieb mit magnetgelagerter Spindelwelle;
- **Fig. 2**: ein zweites Ausführungsbeispiel eines erfindungsgemäßen Werkzeugantrieb mit magnetgelagerter Spindelwelle;
- **Fig. 3**: Diagramm eines gewünschten Makrovorschubs einer Spindelwelle;
- **Fig. 4**: Diagramm einer erfindungsgemäßen axialen Mikrovibrationsüberlagerung einer Spindelwelle;
- **Fig. 5**: Superpositionsdiagramm der Makro- und Mikrobewegung aus Fig. 3 und Fig. 4
- **Fig. 6**: Schematische Darstellung einzelner Bohrverfahrensschritte beim Durchbohren eines Kompositwerkstücks mit einer Ausführungsform der Erfindung;
- **Fig. 7**: schematische Darstellung einer Gratbildung einer Durchgangsbohrung;
- **Fig. 8**: Blockschaltdiagramm einer Ausführungsform einer Steuer- und/oder Regeleinrichtung der Erfindung;
- **Fig. 9**: ein weiteres Ausführungsbeispiel eines erfindungsgemäßen Werkzeugantrieb mit magnetgelagerter Spindelwelle.

In den Figuren sind gleiche oder gleichartige Komponenten mit gleichen Bezugszeichen beziffert.

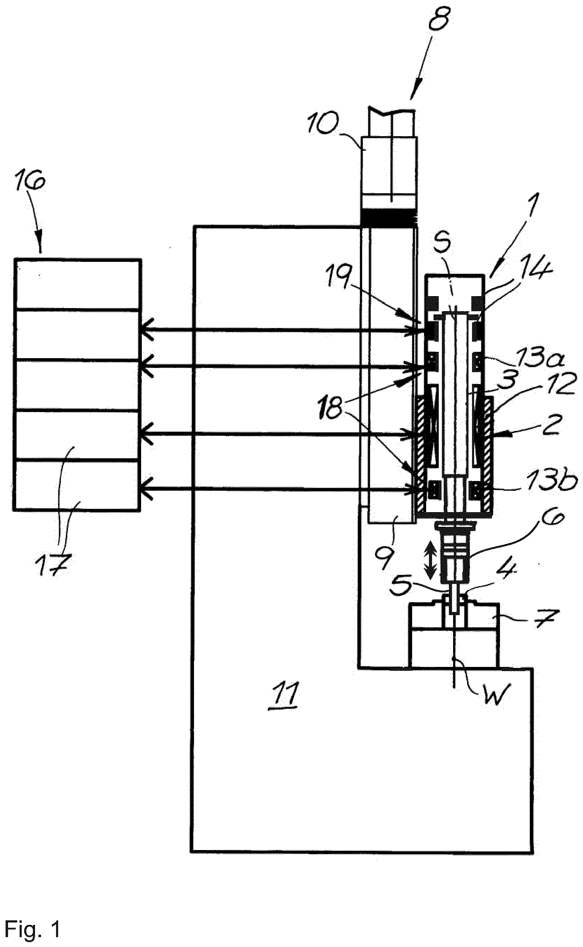

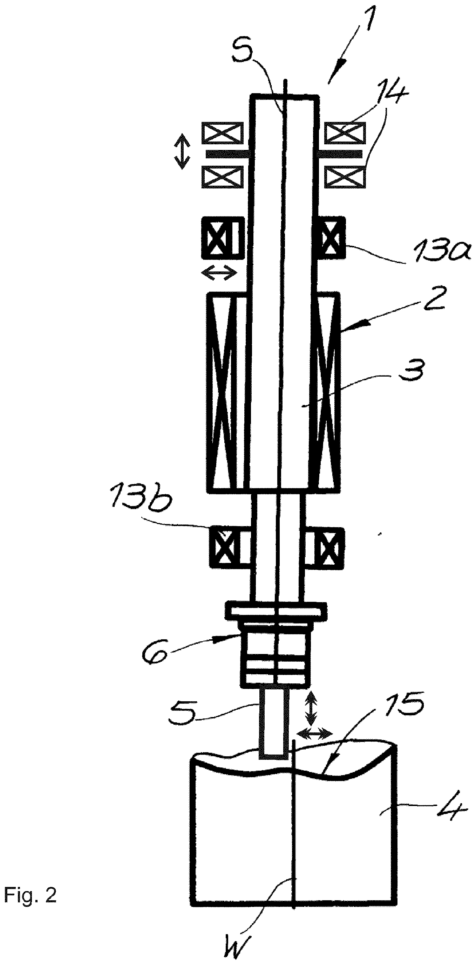

In den Figs. 1 und 2 sind jeweils eine Vorrichtung zur Bohrbearbeitung von Werkstücken, insbesondere von metallischen, Kunststoff -oder Komposit-Werkstücken nach Ausführungsformen der Erfindung dargestellt.

Gemäß Fig. 1 weist eine solche Vorrichtung in ihrem grundsätzlichen Aufbau eines Werkzeugantrieb 1 mit einer über einen Spindelantrieb 2 rotierend antreibbaren Spindelwelle 3 auf, an welcher ein auf das Werkstück 4 arbeitendes Werkzeug 5 befestigt ist. Das Werkzeug 5 ist über eine Werkzeughalterung 6 an der Spindelwelle 3 befestigt und rotiert um die Spindelachse S bzw. Werkzeugachse. Das Werkstück 4 ist an einer Werkstückaufnahme 7 bzw. Werkstückhalterung befestigt und kann ggf. ebenfalls um die Werkstückachse W rotieren. Ferner ist im Ausführungsbeispiel nach Fig. 1 eine mechanische Vorschubeinrichtung 8 für den Werkzeugantrieb 1 vorgesehen. Die Vorschubrichtung 8 (bzw. Zustelleinheit) weist einen Vorschubschlitten 9 bzw. Zustellschlitten auf, welcher über einen Vorschubantrieb 10 bzw. Zustellantrieb an einem Maschinengestell 11 verschiebbar ist. Der Werkzeugantrieb 1 ist über eine Spindelhalterung 12 fest an dem Vorschubschlitten 9 angeordnet.

Die Spindelwelle 3 ist in dem Werkzeugantrieb 1 in zumindest zwei Radiallagern 13a, 13b und in zumindest einem Axiallager 14 in fünf Achsrichtungen gelagert. Das Axiallager 14 umfasst zwei Ringspulenmagnete, die axial entgegengesetzt zu einem um die Spindelwelle drehfest angeordneten Scheibenanker angeordnet sind und mittels denen eine Verschiebung der Welle in axialer Richtung ermöglicht wird. Des Weiteren sind ein oberes und ein unteres bzw. ein hinteres und ein vorderes Radiallager 13a, 13b vorgesehen, wobei der Spindelantrieb 2 zwischen diesen beiden Radiallagern 13a, 13b angeordnet ist. Bei dem Spindelantrieb 2 handelt es sich im Ausführungsbeispiel um einen mehrpoligen Asynchronmotor.

Es sind sowohl die Radiallager 13a, b als auch das Axiallager 14 als magnetische Lager ausgebildet. Die Lagerteile dieser magnetischen Lager werden berührungsfrei mit Luftspalt durch magnetische Kräfte getrennt gehalten, wobei diese magnetischen Kräfte durch Elektromagneten erzeugt und eingestellt werden. Damit lässt sich die Spindelachse S in den Radiallagern 13a, 13b in radialer Richtung und in dem Axiallager 14 in axialer Richtung in gewissen Grenzen verschieben und einstellen.

Fig. 1 zeigt im Übrigen, dass das Ausführungsbeispiel eine Steuer- bzw. Regeleinrichtung 16 aufweist, welche mit den beiden Radiallagern 13a, b und mit dem Axiallager 14 und mit dem Spindelantrieb 2 verbunden ist. Mit Hilfe der Steuer- und/oder Regeleinrichtung 16, welche mehrere Reglermodule 17 aufweist, lassen sich zunächst einmal ein Radialversatz V als auch der Anstellwinkel dynamisch veränderbar einstellen. Dabei sind den Radiallagern 13a, 13b und dem Axiallager 14 jeweils zumindest ein Messwertaufnehmer 18, 19 zugeordnet, wobei der Messwertaufnehmer 18 vorzugsweise in die magnetischen Lager 13a, b, 14 integriert sind. Die Steuer- und/oder Regeleinrichtung 16 beeinflusst das Axiallager 14 als auch die beiden Radiallager 13a, b derart, dass aktiv Vibrationsbewegungen in längsaxialer Richtung als auch in radialer Richtung gezielt mit einstellbarer Frequenz und Amplitude aufbringbar sind, um gewünschte Spangrößen und Spanformen zu erreichen, die Wärmeentwicklung zu minimieren, Standzeit zu erhöhen und Bohrzeiten zu verkürzen.

Da nicht nur die Radiallager 13a, 13b, sondern auch das Axiallager 14 als magnetische Lager ausgebildet sind, besteht im Rahmen der Erfindung die Möglichkeit, dass auch die Position der Spindelwelle 3 in axialer Richtung innerhalb des Werkzeugantriebs 1 mittels des Axiallagers 14 einstellbar ist. Dieses gelingt durch exakte Einstellung des Magnetspaltes innerhalb des Axiallagers 14 und die Modulation einer einstellbaren Vibrationsbewegung, so dass die Zustellbewegung bzw. Vorschubbewegung in gewissen Grenzen durch Ansteuerung des Axiallagers 14 erfolgen kann. Damit gelingt zunächst einmal eine axiale Zustellung des Werkzeuges 5 in kleinsten Schritten unabhängig von der ggf. zusätzlich vorhandenen elektromotorischen Vorschubeinrichtung 8, die eine Grobeinstellung der axialen Position vorgeben kann und den gesamten Werkzeugantrieb 1 verschiebt. Über die magnetischen Axiallager 14 lassen sich Vorschubweg, Vorschubgeschwindigkeit und insbesondere die Vorschubkraft bzw. Pressdruck des Werkzeuges 5 gegen das Werkstück 4 zu beeinflussen.

Unter Berücksichtigung der integrierten Messwertaufnehmer 19 gelingt eine kraftgesteuerte oder auch kraft- und weggesteuerte spanabhebende Bearbeitung mit Modulation von Mikrovibrationsbewegungen. Die über die Lager ermittelten Messwerte erlauben Rückschlüsse über den Zustand des Werkzeuges 5 und einen evtl. Werkzeugbruch, so dass hier auch eine einfache und zuverlässige Überwachung erfolgen kann, ohne dass separate Messwertaufnehmer eingesetzt werden müssen.

Die Steuer/Regeleinrichtung 16 kann als Industrie-PC ausgebildet bzw. Bestandteil eines Industrie-PC sein, welcher mit den Messwertaufnehmern 18, 19 in Verbindung steht. Dieser PC wandelt die in den Lagern über die Aufnehmer 18 und/oder 19 gemessenen Stromwerte in Kraftgrößen, welche an eine WegSteuerung weitergeleitet werden, so dass eine kombinierte Kraft-WegSteuerung/Regelung bei der Bearbeitung erfolgen kann und die Vibrationsbewegung an aktuell auftretende Bohrverhältnisse angepasst werden können.

Eine abgewandelte Ausführungsform der Erfindung ist anhand der Fig. 2 erläutert. Diese zeigen die Bohrbearbeitung an einer Freiformfläche mit einem Werkzeug 5 mit beschichtetem Schneidstoff zur Oberflächenfeinstbearbeitung, z.B. einem Diamantstift. Da das Werkzeug 5 über die Spindel 3 mit Hilfe der magnetischen Radiallager 13a, b und dem Axialmagnetlager 14 in gewissen Grenzen axial und radial frei und vollautomatisch positionierbar ist, besteht die Möglichkeit, durch elektronische Ansteuerung der Lager 13a, 13b, 14 über die Steuer- bzw. Regeleinrichtung eine exakte Positionierung des Werkzeuges unter Berücksichtigung der zu erzeugenden bzw. zu bearbeitenden Freiformfläche zu gewährleisten. Dabei kann im Sinne einer spanenden Bearbeitung eine bereits geformte Freiformfläche über eine Kraftsteuerung adaptiv bearbeitet werden. Es besteht aber auch die Möglichkeit, dass die Freiformfläche mit Materialabtrag unter Berücksichtigung zuvor exakt berechneter und in die Steuer- bzw. Regeleinrichtung eingegebener Werte bearbeitet bzw. erzeugt wird.

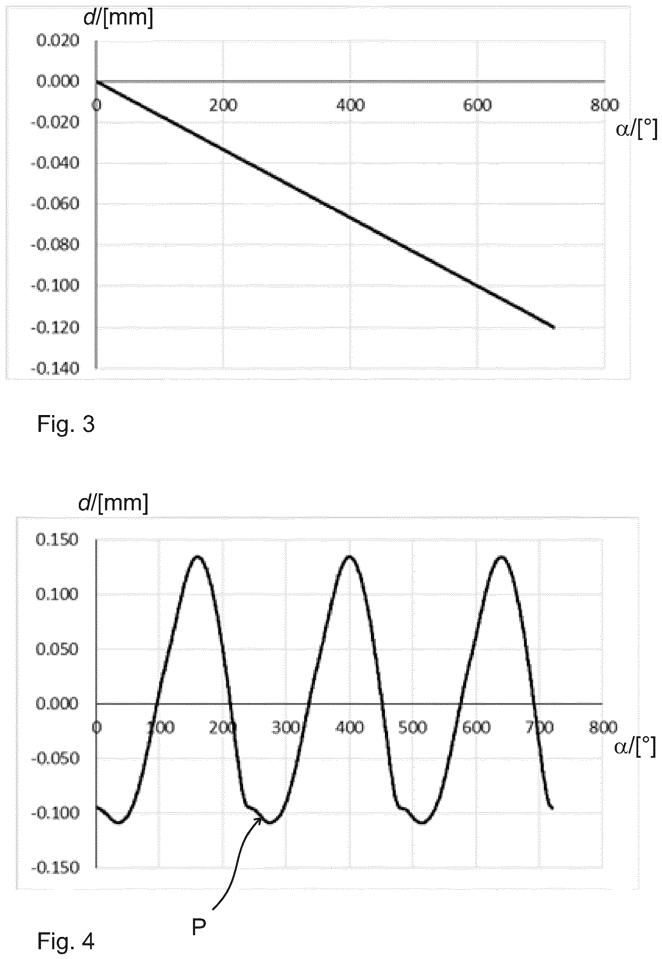

In der Fig. 3 ist ein gewünschter kontinuierlicher Werkzeugvorschub eines Bohrwerkzeugs dargestellt, wobei in der Abszisse der Drehwinkel des Werkzeugs in Grad [°] dargestellt ist, und die Ordinate eine Eintauchtiefe in [mm] angibt. Es ist ein gewünschter Vorschub von 0,06mm pro Umdrehung des Bohrwerkzeugs angestrebt.

Die Fig. 4 zeigt entsprechend hierzu einen Sollwertverlauf einer axialem Vibrationsschwingung in Bohrrichtung, die das Bohrwerkzeug in einer Ausführungsform der Erfindung vollführt, wobei ein Amplitudenhub von 0,13 mm bei einer Hubfrequenz von 1,5Hz des Bohrwerkzeugs erreicht werden soll. Im unteren Bereich des Hubs im Abschnitt P des Sollwertverlaufs berührt die Schneide des Bohrwerkzeugs den Bohrgrund und somit die Werkstückoberfläche. Im Abschnittsbereich P des Sollwerteverlaufs kann die axiale Geschwindigkeit dahingehend beeinflusst werden, so dass ein Werkzeugkopf gedämpft auf eine Werkzeugoberfläche aufsetzt, wodurch ein Schlagimpuls verringert und die Standzeit des Werkzeugs erhöht werden kann. Der Sollwerteverlauf im Bereich des Abschnitts P kann unter Berücksichtigung von vorgegebenen Materialparametern und Prozessparametern angepasst werden. Der Sollwerteverlauf der Vibrationsschwingung kann dynamisch dem Bohrprozess angepasst werden.

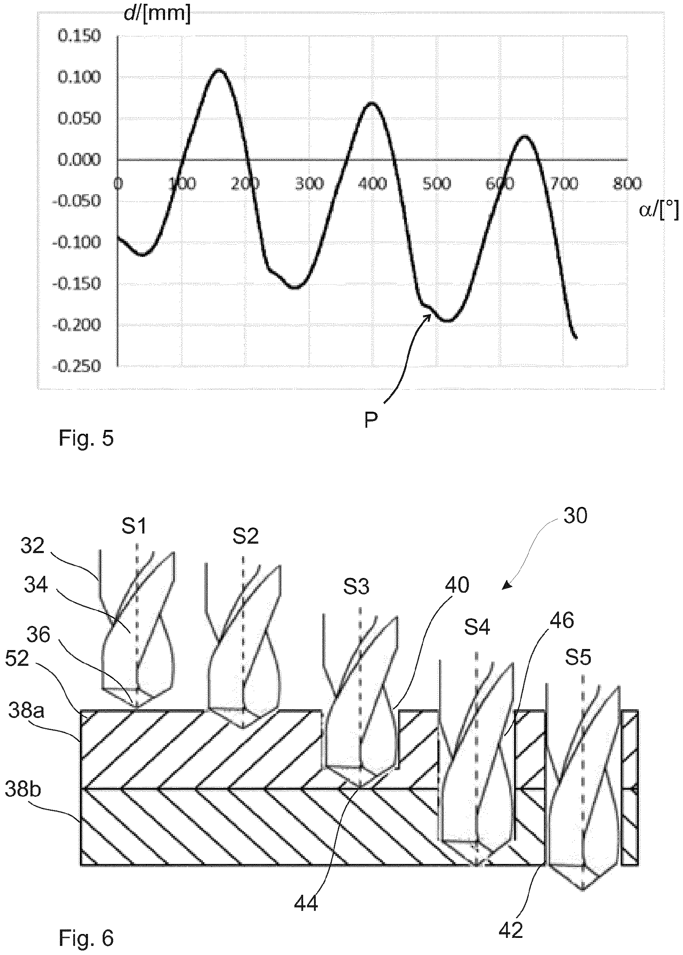

In der Abfolge zeigt die Figur 5 einen überlagerten Sollwerteverlauf des kontinuierlichen Vorschubs nach Fig. 3 und einer optimierten Vibrationsschwingungsbewegung nach Fig. 4, wodurch ein kontinuierlicher Vorschub und eine axiale Oszillation der längsaxialen Position der Schneidkante erreicht wird, so dass insbesondere beim Tieflochbohren leicht entfernbare Bohrspäne erreicht, Wärmeentwicklung verringert, Standzeit erhöht und Bearbeitungszeit verkürzt werden kann. Der eingezeichnete Abschnitt *P* zeigt die Berührung des Bohrwerkzeugs mit dem Bohrgrund, an der ein Werkzeugeingriff mit dem Werkstück beginnt und die Spanbildung bei verringertem, einstellbarem Vorschub einsetzt. In der Fig. 6 wird eine Durchbohrung 30 eines Komposite-Werkstücks 38 mit einer oberen, metallischen Auflagenschicht 38a und einer unteren Kohlenfaserverbundschicht 38b, wie sie beispielsweise bei einer Tragfläche eines Flugzeugs eingesetzt wird, dargestellt. Im Schritt S1 setzt das Bohrwerkzeug 32, das um die Achse 34 rotiert, mit der Schneidspitze 36 auf der Oberfläche der metallischen Schicht 38a auf, um eine Eintrittsöffnung 40 auszubilden. In den weiteren Schritten S2 und S3 bohrt sich das Bohrwerkzeug 32 überlagert mit längsaxialen Vibrationsbewegungen bis zur Grenzfläche 44 zwischen Metallschicht 38a und 38b durch. Da der Schneidvorgang und die Spanbildung in der unteren Kompositschicht 38b verändert ist, kann Frequenz und Amplitude der Vibrationsschwingung geändert, z.B. die Amplitude erhöht und die Frequenz verringert werden und hierdurch eine erhöhte Vorschubgeschwindigkeit bei gleichbleibender Spangröße und Spanform erreicht werden. Das Erreichen bzw. durchdringen der Schichtgrenze 44 kann durch eine Veränderung der Energieaufnahme oder eine Veränderung des dynamischen Verhaltens z.B. Drehmoment oder Vorschub des Bohrwerkzeugs 32 indirekt erkannt werden, oder bei vorbekannter Geometrie durch Erreichen einer vorbestimmten Eintauchtiefe in die Bohrung 30 erkannt werden, so dass die Vibrationsüberlagerungsbewegung angepasst werden kann. In den Schritten S4 bis S5 wird die zweite Materialschicht 38b durchbohrt, bis eine untere Austrittsöffnung 42 geschaffen ist, durch die die Bohrspitze 36 durch den Bohrkanal 46 durchtritt.

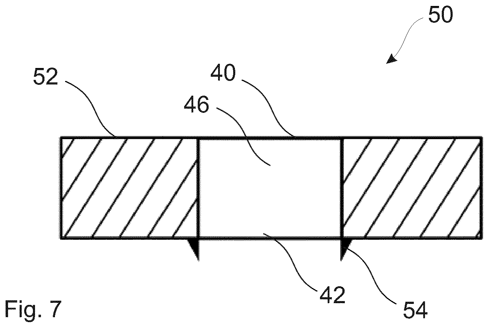

In der Fig. 7 ist ein Bohrkanal 46 einer Durchbohrung 50 durch ein Werkstück 52 dargestellt. In der Regel weisen sowohl die Eintrittsöffnung 40 als auch die Austrittsöffnung 42 Bohrgrate 54 auf, die auf einer Materialverdrängung beruhen. Grate 54 sind unerwünscht, da bei Fügeverfahren diese zu ungewollten Abständen führen, Verletzungsgefahren bilden und z.B. aerodynamische Funktionen beeinträchtigen. Die Gratbildung wird in der Regel durch Entgratwerkzeuge nachträglich entfernt. Durch ein erfindungsgemäßes Bohrverfahren können bei gezielter Anpassung der Vibrationsbewegungen bei Schaffung der Eingangs- und der Ausgangsöffnungen 40, 42 der Durchgangsbohrung 46 die Gratbildung deutlich verringert werden, so dass eine Nachbearbeitung unnötig wird, oder nur in geringem Umfang durchgeführt werden muss.

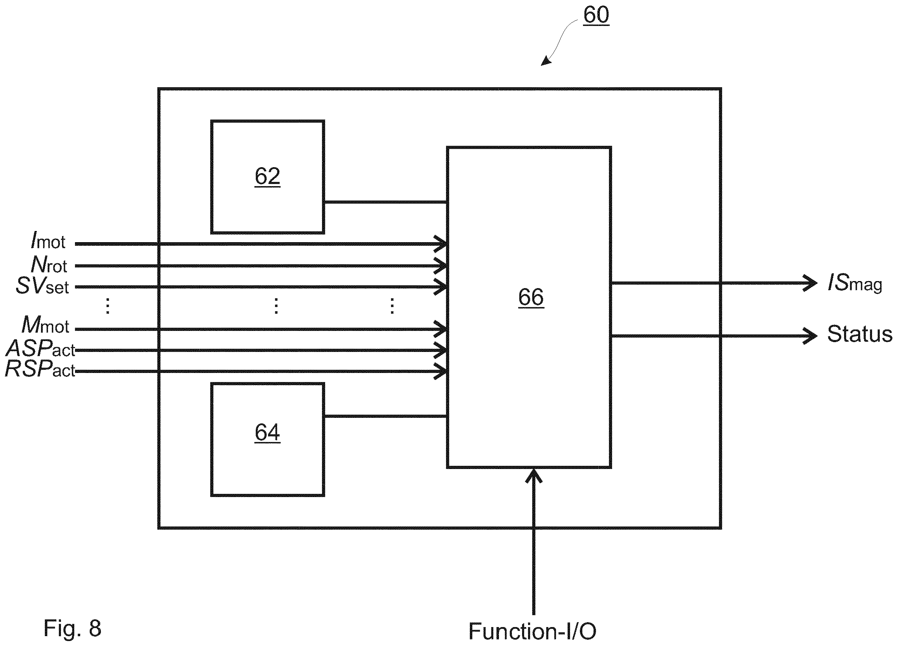

Die Fig. 8 stellt ein Blockschaltdiagram eine Ausführungsform einer Regel- und Steuereinrichtung 60 dar, die in einem erfindungsgemäßen Werkzeugantrieb 1 zur Ansteuerung eines elektromagnetischen Axialaktors einer Spindelwelle 3 zum Antrieb eines Drehwerkzeugs 5, 32 wie Bohrer oder Fräser eingesetzt werden kann. Die Einrichtung 60 kann in einem Axialaktorregler integriert sein. Die Steuer- und/oder Regeleinrichtung 60 umfasst eine Mikrovibrations-Regeleinheit 66, die als speicherprogrammierbares Aktuatorprozessorsystem ausgelegt sein kann. An der Regeleinheit 66 ist eine Speichereinheit 62 angeschlossen, die eine Vielzahl von Sollwertverläufen einer Mikrovibrationsschwingungen und auch geführten Makroprofile für unterschiedliche Bohrprozesse, beispielsweise für verschiedene Werkstoffe, Kompositwerkstoffe, Tieflochbohrvorgängen, Fräsvorgänge etc. speichert. Des Weiteren ist an der Regeleinheit 66 eine Betriebsparameter- und Istwertverlauf-Speichereinheit 64 angeschlossen, die eine Veränderungen von Betriebsparametern aufzeichnet und Istwertverläufe der Vibrationsschwingungen speichert, so dass aus Veränderungen der Parameter und/oder der Istwertverläufe ein Verschleißzustand des Werkzeugs 5, 32 ermittelt werden kann. So können indirekte und direkte Bohrparameter wie beispielsweise Motorstrom *I*ₘₒₜ, Werkzeugdrehzahl *N*ᵣₒₜ, Sollvorschub *SV*ₛₑₜ, Werkzeugdrehmoment *M*ₘₒₜ, axiale Spindel-Istposition *ASP*_{act} und radiale Spindel-Istposition *RSP*_{act} die durch Sensoren direkt oder durch abgeleitete Größen indirekt abgelegt werden. Die Regeleinheit 66 liefert zur Ansteuerung des oder der Axialaktoren und ggf. des oder der Radialaktoren einen oder mehrere Steuerströme *IS*_{mag} und kann des Weiteren Statusinformationen zu einer übergeordneten Werkzeugmaschinensteuerung weitergeben. Des Weiteren können an die Steuer- und/oder Regeleinrichtung ein oder mehreren Funktion sein- und -ausgänge zur externen Programmierung und Anpassung des Verhaltens der Mikrovibrations-Regelung einzugeben und Parameter auslesen zu können.

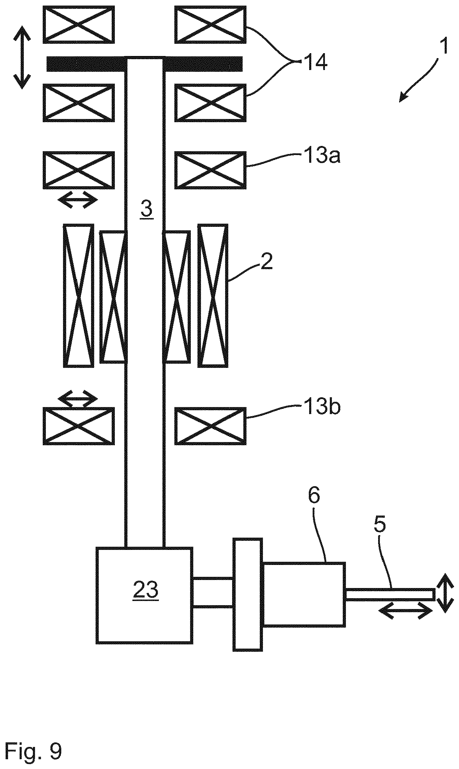

In der Fig. 9 ist ein weiteres Ausführungsbeispiel eines Werkzeugantriebs 1 für ein erfindungsgemäßes Betriebsverfahren mit einer Spindelwelle 3, einer Werkzeugaufnahme 6 und einem spanabhebenden Werkzeug 5 dargestellt. Grundsätzlich ist die Spindelwelle 3 entsprechend der Ausführung in Fig. 2 ausgeführt. Am axialen Ende der Spindelwelle 3 ist die Werkzeughalterung 6 mit Werkzeug 5 abweichend hiervon nicht in längsaxialer Richtung zur Spindelwelle 3 mit dieser drehfest verbunden, sondern die Drehachse der Werkzeughalterung 6 ist über ein Winkelumlenkelement 23, beispielsweise einem Winkelgetriebe um 90° gegenüber der Drehachse der Spindelwelle 3 verschwenkt. Hierdurch ist ein kinematisches Vertauschen der axialen und radialen Bewegungen der Spindelwelle 3 zu den radialen und axialen Bewegung des Werkzeugs 5 gegeben. Eine Axialbewegung des Werkzeugs 5 kann durch die Radialmagnetlager 13 der Spindelwelle erzeugt werden und ein radiales Auslenken des Werkzeugs 5 kann durch das Axialmagnetlager 14 und ebenfalls durch Radialmagnetlager 13 erreicht werden. Der Einsatz des Winkelumlenkelements 23 verkleinert die Bauform des Werkzeugantriebs 1 so dass dieses beispielsweise im Maschinenbett einer Werkzeugbearbeitungsmaschine nachträglich eingebaut werden kann. Gleichwohl kann in diesem Ausführungsbeispiel, sofern eine radiale Beweglichkeit des Werkzeugs 5 zumindest in einer Richtung nicht erforderlich ist, auf das Axialmagnetlager 14 verzichtet werden.

### Bezugszeichenliste

- 1: Werkzeugantrieb
- 2: Spindelantrieb
- 3: Spindelwelle
- 4: Werkstück
- 5: Spanabhebendes Werkzeug
- 6: Werkzeughalterung / Werkzeugfutter
- 7: Werkstückaufnahme
- 8: Mechanische Vorschubeinrichtung
- 9: Vorschubschlitten
- 10: Vorschubantrieb
- 11: Maschinengestell
- 12: Spindelhalterung
- 13: Radialmagnetlager
- 14: Axialmagnetlager
- 15:
- 16: Steuer- und/oder Regeleinrichtung
- 17: Reglermodule
- 18: Messwertaufnehmer
- 19: Messwertaufnehmer

- 30: Durchbohrung
- 32: Bohrwerkzeug
- 34: Werkzeugachse
- 36: Schneidspitze
- 38: Materialschicht
- 40: Eintrittsöffnung
- 42: Austrittsöffnung
- 44: Materialschicht-Grenzfläche
- 46: Bohrkanal

- 50: Durchbohrung
- 52: Werkstück
- 54: Bohrgrat

- 60: Regel- und/oder Steuereinrichtung
- 62: Sollwertverlauf-Speichereinheit
- 64: Betriebsparameter- und Istwertverlauf-Speichereinheit
- 66: Mikrovibrations-Regeleinheit

## Patentansprüche

1. Betriebsverfahren für einen Werkzeugantrieb (1) mit Spindelwelle (3) für eine spanabhebende Bearbeitung, umfassend zumindest einen elektromagnetischen Axialaktor und eine Steuer- und/oder Regeleinrichtung (16) für den Betrieb des Axialaktors zur längsaxialen Lageänderung der Spindelwelle (3), wobei die Steuer- und/oder Regeleinrichtung (16) den Axialaktor zur Erzeugung einer Mikrovibrationsbewegung der Spindelwelle (3) ansteuert, wobei zumindest ein Axialmagnetlager (14) und/oder ein Linearmotor als zumindest Teil des Axialaktors vorgesehen ist, **dadurch gekennzeichnet, dass** der elektromagnetische Axialaktor unabhängig von einem Vorschub eine einstellbare axiale Mikrovibrationsbewegung der Spindelwelle (3) überlagert, um bei Bohrungen insbesondere bei Tieflochbohrungen die entstehenden Spangröße und Spanform des Materialabtrags zu beeinflussen.

2. Betriebsverfahren nach Anspruch 1, **dadurch gekennzeichnet, dass** zumindest ein Axialmagnetlager (14) und/oder ein Linearmotor als Axialaktor zur Erzeugung der axialen Mikrovibrationsbewegungen genutzt wird.

3. Betriebsverfahren nach Anspruch 1 oder 2, **dadurch gekennzeichnet, dass** zumindest ein Radialmagnetlager (13a, 13b) zur Erzeugung einer radialen Bewegung genutzt wird, wobei bevorzugt die Spindelwelle (3) durch das Radialmagnetlager (13a, 13b) radial geführt wird, um eine gezielte Spindelbewegung zum Entgraten einer Bohröffnung (40, 42) und/oder eine radiale Erweiterung eines Bohrkanals (46) zu erzeugen.

4. Betriebsverfahren nach einem der vorgenannten Ansprüche, **dadurch gekennzeichnet, dass** der Steuerstrom zum Betrieb des Axialaktors, insbesondere der Magnetlager (13a, 13b, 14) durch Steuer- und Regelkreise innerhalb der Steuer- und Regeleinrichtung (16) auf vorgebbare Maximalwerte begrenzt ist, und/oder der Sollschwingungsverlauf der Mikrovibrationsbewegung, insbesondere Amplitude und Frequenz der Mikrovibrationsbewegung in Abhängigkeit von direkt oder indirekt ermittelbaren Bohrparametern gewählt und während des Bohrvorgangs angepasst wird, wobei bevorzugt Änderungen der direkt oder indirekt ermittelbare Bohrparameter und/oder Parameter des Istwertverlaufs der Mikrovibrationsbewegungserzeugung hinsichtlich eines Verschleißes des Werkzeugs (5) ausgewertet werden.

5. Betriebsverfahren nach einem der vorgenannten Ansprüche, **dadurch gekennzeichnet, dass** die Spindelwelle (3) zur Kompensation von Unwuchten azentrisch zur Spindelwellenachse ausgelenkt wird.

6. Betriebsverfahren nach einem der vorgenannten Ansprüche, **dadurch gekennzeichnet, dass** die Steuer- und Regeleinrichtung die entstehenden Prozesskräfte, insbesondere Anpressdruck, Vorschubkraft, Drehzahl und/oder Drehmoment des Werkzeuges (5) auf vorgebbare Maximalwerte begrenzt.

7. Betriebsverfahren nach einem der vorgenannten Ansprüche, **dadurch gekennzeichnet, dass** ein Sollwertverlauf der Mikrovibrationsbewegung bei oder vor Aufsetzen des Werkzeuges auf das Werkstück (4, 52) eine geringere Vorschubgeschwindigkeit vorgibt.

8. Betriebsverfahren nach einem der vorgenannten Ansprüche, **dadurch gekennzeichnet, dass** mittels einer in der Regel- und/oder Steuereinrichtung (16, 60) umfassten Positionssensorik der Magnetlager unerwünschte Kollisionen der Werkzeuges erkannt werden und Maßnahmen zur Behebung des Kollisionszustandes eingeleitet werden.

## Claims

1. Operating method for a tool drive (1) with spindle shaft (3) for metal-cutting machining, comprising at least one electromagnetic axial actuator and an open-loop and/or closed-loop control device (16) to operate the axial actuator for a position change of the spindle shaft (3) in the longitudinal axis, said open-loop and/or closed-loop control device (16) operating the axial actuator to generate a microvibration movement of the spindle shaft (3), at least one axial magnetic bearing (14) and/or a linear motor being provided as at least a part of the axial actuator, **characterized in that** the electromagnetic axial actuator is superimposed, independently of a feed, on a settable axial microvibration movement of the spindle shaft (3) in order to influence the resultant chip size and chip shape of the material removed during drilling, in particular during drilling of deep holes.

2. Operating method according to claim 1, **characterized in that** at least one axial magnetic bearing (14) and/or a linear motor is used as an axial actuator to generate the axial microvibration movements.

3. Operating method according to claim 1 or 2, **characterized in that** at least one radial magnetic bearing (13a, 13b) is used to generate a radial movement, the spindle shaft (3) preferably being radially guided by the radial magnetic bearing (13a, 13b) in order to generate a selected spindle movement for deburring a drilled aperture (40, 42) and/or a radial widening of a drill channel (46).

4. Operating method according to one of the above claims, **characterized in that** the control current for operating the axial actuator, in particular the magnetic bearings (13a, 13b, 14), is limited to presettable maximum values by open-loop and closed-loop control circuits inside the open-loop and closed-loop control device (16), and/or the set vibration curve of the microvibration movement, in particular amplitude and frequency of the microvibration movement, is selected depending on directly or indirectly ascertainable drilling parameters and is adjusted during the drilling process, changes in said directly or indirectly ascertainable drilling parameters and/or parameters of the actual curve of microvibration movement generation preferably being evaluated in respect of wear of the tool (5).

5. Operating method according to one of the above claims, **characterized in that** the spindle shaft (3) is deflected acentrically to the spindle shaft axis for compensation of imbalances.

6. Operating method according to one of the above claims, **characterized in that** the open-loop and closed-loop control device limits the resultant process forces, in particular contact pressure, feed force, speed and/or torque of the tool (5), to presettable maximum values.

7. Operating method according to one of the above claims, **characterized in that** a set value curve for the microvibration movement presets a lower feed speed during or prior to applying the tool to the workpiece (4, 52).

8. Operating method according to one of the above claims, **characterized in that** unwanted collisions of the tools are detected by means of a position sensor system for the magnetic bearings comprised in the closed-loop control and/or open-loop control device (16, 60), and measures are initiated to rectify the collision state.

## Revendications

1. Procédé de fonctionnement pour un entraînement d'outil (1) avec arbre de broche (3) pour un usinage par enlèvement de copeaux, comprenant au moins un actionneur axial électromagnétique et un dispositif de commande et/ou de régulation (16) pour le fonctionnement de l'actionneur axial destiné au changement de position dans le sens axial longitudinal de l'arbre de broche (3), sachant que le dispositif de commande et/ou de régulation (16) pilote l'actionneur axial pour produire un mouvement de microvibration de l'arbre de broche (3), sachant qu'au moins un palier magnétique axial (14) et/ou un moteur linéaire est prévu au moins comme partie de l'actionneur axial, **caractérisé en ce que** l'actionneur axial électromagnétique superpose un mouvement de microvibration de l'arbre de broche (3) réglable indépendamment d'une avance, afin d'influencer la taille et la forme des copeaux de la matière enlevée produits par les perçages, notamment par les perçages de trous profonds.

2. Procédé de fonctionnement selon la revendication 1, **caractérisé en ce qu'**au moins un palier magnétique axial (14) et/ou un moteur linéaire sert d'actionneur axial pour produire le mouvement de microvibration axial.

3. Procédé de fonctionnement selon la revendication 1 ou 2, **caractérisé en ce qu'**au moins un palier magnétique radial (13a, 13b) est utilisé pour produire un mouvement radial, sachant que de préférence l'arbre de broche (3) est guidé radialement à travers le palier magnétique radial (13a, 13b) pour produire un mouvement de broche ciblé destiné à ébarber un alésage (40, 42) et/ou pour produire une extension radiale d'un conduit de perçage (46).

4. Procédé de fonctionnement selon une des revendications précédentes, **caractérisé en ce que** le courant de commande pour le fonctionnement de l'actionneur axial, notamment des paliers magnétiques (13a, 13b, 14), est limité à des valeurs maximales prédéfinissables par des boucles de commande et de régulation à l'intérieur du dispositif de commande et de régulation (16), et/ou que la courbe des oscillations théoriques du mouvement de microvibration, notamment l'amplitude et la fréquence du mouvement de microvibration, est sélectionnée en fonction des paramètres de perçage déterminables directement ou indirectement et est ajustée lors du processus de perçage, sachant que de préférence des modifications des paramètres de perçage déterminables directement ou indirectement et/ou des paramètres de la courbe des valeurs réelles de la production du mouvement de microvibration sont évaluées concernant une usure de l'outil (5).

5. Procédé de fonctionnement selon une des revendications précédentes, **caractérisé en ce que** l'arbre de broche (3) est dévié de manière décentrée par rapport à l'axe de l'arbre de broche pour compenser les défauts d'équilibrage.

6. Procédé de fonctionnement selon une des revendications précédentes, **caractérisé en ce que** le dispositif de commande et de régulation limite les forces de processus générées, notamment la pression d'appui, la force d'avance, la vitesse de rotation et/ou le couple de l'outil (5) à des limites maximales prédéfinissables.

7. Procédé de fonctionnement selon une des revendications précédentes, **caractérisé en ce qu'**une courbe des valeurs théoriques du mouvement de microvibration prédéfinit une vitesse d'avance inférieure lors ou avant l'application de l'outil sur la pièce d'oeuvre (4, 52).

8. Procédé de fonctionnement selon une des revendications précédentes, **caractérisé en ce qu'**au moyen d'un ensemble de capteurs de position des paliers magnétiques, compris dans le dispositif de régulation et/ou de commande (16, 60) sont détectées des collisions indésirables de l'outil et que des mesures sont prises pour remédier à l'état de collision.
